Europäisches Patentamt

European Patent Office

Office européen des brevets

(19)

(11)  EP 1 161 483 B1

(12)  **EUROPEAN PATENT SPECIFICATION**

(45) Date of publication and mention
of the grant of the patent:
**17.09.2003  Bulletin 2003/38**

(51) Int Cl.⁷: **C08J 5/18**, B29D 7/01,
B32B 15/08

(21) Application number: **00922516.0**

(22) Date of filing: **09.03.2000**

(86) International application number:
**PCT/EP00/02211**

(87) International publication number:
**WO 00/053665 (14.09.2000 Gazette 2000/37)**

(54)  **PROCESS FOR PRODUCING A PLASTIC WEB FOR COATING A METAL SUBSTRATE, LAMINATE COMPRISING THIS PLASTIC WEB, AND PRODUCT OR COMPONENT PRODUCED THEREWITH**

VERFAHREN ZUR HERSTELLUNG EINER KUNSTSTOFFBAHN ZUM BESCHICHTEN EINES METALLISCHEN SUBSTRATES, SOLCHE KUNSTSTOFFBAHN ENTHALTENDES LAMINAT UND DADURCH HERGESTELLTES PRODUKT ODER TEIL

PROCEDE DE PRODUCTION D'UNE BANDE PLASTIQUE POUR RECOUVRIR UN SUBSTRAT METALLIQUE, STRATIFIE CONTENANT CETTE BANDE PLASTIQUE ET PRODUIT OU CONSTITUANT PRODUIT AVEC CELLE-CI

(84) Designated Contracting States:
**AT BE CH CY DE DK ES FI FR GB GR IE IT LI LU MC NL PT SE**

(30) Priority:  **10.03.1999  NL 1011518**
**21.09.1999  NL 1013101**

(43) Date of publication of application:
**12.12.2001   Bulletin 2001/50**

(73) Proprietor: **Corus Staal BV**
**1970 CA Ijmuiden (NL)**

(72) Inventors:
• **BEENTJES, Petrus, Cornelis, Jozef**
**NL-1902 AA Castricum (NL)**
• **DEN HARTOG, Adrianus, Johannes**
**NL-2315 EB Leiden (NL)**

• **VAN VEENEN, Willem, Jan**
**NL-1945 WL Beverwijk (NL)**

(74) Representative: **Kruit, J., Ir. et al**
**Corus Technology BV**
**Corus Intellectual Property Department**
**PO Box 10000**
**1970 CA IJmuiden (NL)**

(56) References cited:
**EP-A- 0 437 942          EP-A- 0 685 509**
**EP-A- 0 839 854          US-A- 5 334 450**

• **DATABASE WPI Section Ch, Week 199908 Derwent Publications Ltd., London, GB; Class A23, AN 1999-090132 XP002129572 & JP 10 324754 A (TORAY IND INC), 8 December 1998 (1998-12-08)**

**Description**

The invention relates to a process for producing a plastic web for coating a metal substrate, in which the plastic used is polyester. The invention also relates to a laminate containing a plastic web of this nature, and to a product or component which is produced using this laminate.

For various reasons, it is often desirable for metal to be provided with an additional layer in the form of a metallic or organic coating. This layer may serve to protect or decorate the metal, depending on its subsequent use. For packaging steel, a combination of a metallic and organic coating layer is generally used, so that the coated material, during its final use, protects the packaged foodstuff well, will not exhibit any corrosion, and the quality of the packaged foodstuff will be maintained.

The metallic covering layer used is often tin or chromium with chromium oxide on top, or a combination of these two layers. In the invention described below, good results have been obtained on packaging steel provided with a thin layer of chromium and chromium oxide (ECCS), but use of the invention is not limited to this type of packaging steel.

Lacquers are often used as the organic coating layer. Examples are epoxy and epoxyphenol lacquers, polyester lacquers and organosol lacquers, or combinations thereof. Sometimes, using these lacquers involves formability problems, with corrosion occurring or with undesirable substances being released from the lacquer to the packaged foodstuff, or with the undesirable emission of solvents.

In this respect, better results are obtained by packaging steel which is provided with a plastic web as a coating layer. Examples of plastics which can be used for this purpose are polypropylene, polyethylene, polyamide and polyester. The plastic web can be applied by producing it in a separate production process, rolling it up and unwinding it again at the location of the coating line, where it is stuck to the metal by the application of heat and pressure. It is also possible to produce a thin, molten web of plastic in the coating line by extrusion, which is applied to the metal in the molten or solidified state.

A drawback of using a polyester plastic web, such as a web made from PET (polyethyleneterephthalate), as a coating layer is that it is difficult to adhere this web to the packaging steel sufficiently well for it still to be possible to deform the coated metal without the coating layer becoming detached or ruptured when the coated material is subjected to a (wet) heat treatment.

Another drawback is that it is difficult to apply an additional layer to the coating layer which then adheres sufficiently firmly to the plastic coating layers which have previously been used. The additional layer is, for example, a PVC-containing sealing compound which is generally used to seal a screw cap on a glass jar in an airtight manner.

Another drawback is that most polyesters crystallize under the influence of heat. A heat treatment is often required in the production process, for example in order to cure a printing or a compound. During this process crystallisation takes place in many polyesters, which in the case of transparent coating layers results in undesirable discoloration, with the colour of the layer becoming opaque and whitish.

One object of the invention is to provide a process for producing a plastic web for coating a metal substrate in which the polyester used adheres securely to the metal even after deformation of the metal together with the coating layer and a (wet) heat treatment.

Another object is to provide a method of this nature in which the polyester provides good adhesion for a PVC-containing compound which is applied to it.

Yet another object is to provide a process of this nature which forms a plastic layer which remains highly transparent during a heat treatment.

Another object of the invention is to use this process to produce laminates, products and components which satisfy one or more of the abovementioned objects.

According to a first aspect of the invention, one or more of these objects are achieved by means of a process of the type described in the preamble in which the plastic web is produced by extruding a mixture of various polyesters.

It has been found that if the constituent components of the polyesters are selected appropriately and an appropriate preparation method is selected, the problems with adhesion to steel after deformation and use, of discoloration of the coating layer caused by a heat treatment, and of adhesion to PVC-containing compounds are solved.

Preferably, the process is such that the polyesters used are copolyesters. With the aid of these copolyesters, it is easy to manipulate the properties of the polyester layer.

Preferably, copolyesters based on terephthalic acid are used. This is a very standard type of copolyester. More preferably, copolyesters which are formed on the basis of PET are used. These are readily available.

According to an advantageous process, the mixture used is a mixture of a crystallisable polyester and a non-crystallisable polyester. By varying the ratio between the crystallisable polyester and the non-crystallisable polyester, it is possible to adapt the properties in such a manner that, for example, a good adhesion to packaging steel or to a PVC-containing compound or a good resistance to a heat treatment is obtained.

Preferably, the process is such that the non-crystallisable polyester used is a copolyester which contains CHDM (1,4-cyclohexanedimethanol). This polyester containing CHDM is very suitable for manipulation of the properties of the polyester layer.

Preferably, the CHDM-modified copolyester is obtained by reacting a mixture of terephthalic acid, ethylene glycol (ethanediol) and CHDM.

Alternatively, a process is used in which the non-crystallisable polyester used is a PET/PEN copolymer which is obtained by reacting a mixture of terephthalic acid, naphthalenedicarboxylic acid and ethylene glycol (ethanediol). Other non-crystallizable polyesters may also be suitable in order to obtain the effects described.

Preferably, the mixture used has a non-crystallisable weight fraction which is greater than 6%. If this percentage is lower, the adhesion is in many cases insufficient if the plastic web undergoes a subsequent heat treatment and/or substantial deformation.

Preferably, the mixture used has a non-crystallisable weight fraction which is less than 90%. An excessively high percentage of non-crystallisable polymer in some cases leads to undesirable deformation of the plastic web on a metal substrate, resulting in wrinkles, so that the laminate cannot be used as a substrate for, for example, screw caps which have been printed with heat-curing ink.

Advantageously, the mixture used has a non-crystallisable weight fraction which is approximately 25% or greater. In this way, reasonably good adhesion to PVC-containing compounds is obtained.

Advantageously, the mixture used has a non-crystallisable weight fraction which is approximately 33% or greater. This results in a plastic web which remains highly transparent during a heat treatment; a considerably higher percentage is required for a sterilisation treatment.

Good adhesion to PVC-containing compounds is obtained if the mixture used has a non-crystallisable weight fraction which is approximately 50% or greater, if the plastic-coated metal is at most pasteurised.

For sterilisation applications, it is preferable to use a mixture with a non-crystallisable weight fraction which is approximately 66% or greater.

Very good adhesion to compounds is obtained if the mixture used has a non-crystallisable weight fraction which is approximately 75% or greater.

With regard to the above, it should be borne in mind that it is always desirable for the amount of non-crystallisable polymer in the mixture to be kept as low as possible, since non-crystallisable polymer is much more expensive than crystallisable polymer.

According to a second aspect of the invention, a laminate is provided, comprising a metal substrate and a plastic layer, the plastic layer comprising an adhesive layer, this adhesive layer substantially comprising a plastic web produced according to the process described above. The laminate thus exhibits good adhesion between the metal substrate and the plastic layer.

Preferably, the laminate is formed in such a manner that the plastic layer comprises a top layer, the top layer substantially comprising a plastic web produced according to the process described above. This gives the top layer good adhesion for a PVC-containing compound.

According to an advantageous embodiment, the plastic layer of the laminate has an adhesive layer and a top layer, an intermediate layer being present between the adhesive layer and the top layer, the intermediate layer substantially comprising a plastic web which is produced by extruding a polyester. Since the top layer and the adhesive layer primarily have an adhesive function and therefore may be thin, an intermediate layer is desirable in order to make the plastic layer sufficiently thick and strong. In order for it to be possible to extrude the plastic layer in a single operation, the intermediate layer also has to be extrudable.

It is possible to produce the intermediate layer using the process described above.

In this case, the intermediate layer is preferably produced from a mixture with a non-crystallisable weight fraction which is approximately 10% or greater. Preferably, this weight fraction is approximately 33% or greater. In this case too, the amount of non-crystallisable polymer must be kept as low as possible, for cost reasons. A higher percentage should be used for a sterilisation treatment.

The laminate can be used to produce, for example, screw caps, crown corks and easy open ends, as well as packagings and components thereof, such as the base, the lid or the body, a deep-drawn and/or wall-ironed can, a base, cap, wall or valve dish of an aerosol can, or a dish or tray, etc.

A third aspect of the invention provides a component produced from a laminate as described above, in which a PVC-containing compound is applied to the top layer of the plastic layer of the laminate.

In this case, the non-crystallisable weight fraction in the top layer is preferably approximately 25% or greater. This makes it possible to achieve good adhesion results between the top layer and the PVC-containing compound.

Preferably, the weight fraction is approximately 35% or greater. This improves the adhesion results.

In order for it to be possible to subject the component to pasteurisation or a similar heat treatment, however, the non-crystallisable weight fraction is preferably 50% or higher in order to be certain to obtain good adhesion.

For sterilisation applications, the said weight fraction is preferably approximately 66% or higher. The adhesion is then good for all PVC-containing compounds which have been investigated.

However, it has been found that the weight fraction of non-crystallisable polyester required in the top layer depends on the compound used, so that the minimum percentage required has to be determined on the basis of the compound employed.

The invention will be explained in more detail below.

Experiments have shown that a mixture of, for example, two types of polyester is particularly expedient for producing plastic-coated metal, for example packaging steel. This is, for example, a mixture of crystallisable PET, referred to below as PET A, and non-crystallisable PET, referred to below as PET B. An example of a suitable type of PET for PET A is Eastapak 9921w produced by Eastman Chemical Company. An example of a suitable type of PET for PET B is Eastar PETG 6763, also produced by Eastman Chemical Company.

A number of PET coatings were applied with adhesive, intermediate and top layers in which different quantities of PET B have been mixed with PET A.

Three types of polyester and mixtures thereof were tested. The following text will indicate the characteristics of the various types. The two types of polymer are PET A and PET B as defined above. Mixtures were made from these two types. These two types are copolymers of "normal" PET, in which, during the synthesis, a quantity of ethanediol was replaced with 1,4-cyclohexanedimethanol (referred to throughout the rest of this document as CHDM). PET A has a very low CHDM content, while a PET C, which is to be described below, has a higher CHDM content, and PET B has an even higher CHDM content. PET C is completely copolymerised and has a maximum achievable crystallinity which is lower than that of PET A. Eastar PETG 15086 is used for PET C. A copolymer of this nature has significantly different properties from a mixture of PET A and PET B. These PET grades and mixtures thereof are applied as a coating layer to the substrate.

The product codes of the plastic-coated products used and the associated composition of the plastic are given in the table below (all percentages are by weight).

| Code | Adhesive layer | Intermediate layer | Top layer | Steel base |
|------|----------------|--------------------|-----------|------------|
| TP628A | PET A | | | 0.21 mm ECCS, T61CA |
| TP628B | PET C | | | 0.21 mm ECCS, T61CA |
| P 064 | 100% PET B | PET A | 100% PET B | 0.21 mm ECCS, T61CA |
| P 076 | 33% PET B | PET A | 100% PET B | 0.21 mm ECCS, T61CA |
| P 077 | 100% PET B | PET A | 33% PET B | 0.21 mm ECCS, T61CA |
| P 078 | 66% PET B | PET A | 100% PET B | 0.21 mm ECCS, T61CA |
| P 079 | 100% PET B | PET A | 66% PET B | 0.21 mm ECCS, T61CA |
| P080 | 100% PET B | PET A | 100% PET B | 0.21 mm ECCS, T61CA |
| P 086 | 100% PET B | PET A | 100% PET B | 0.155 mm ECCS, DR620CA |
| P 087 | 50% PET B | PET A | 33% PET B | 0.155 mm ECCS, DR620CA |
| P 088 | 50% PET B | PET A | 50% PET B | 0.155 mm ECCS, DR620CA |
| P 089 | 50% PET B | 33% PET B | 50% PET B | 0.155 mm ECCS, DR620CA |
| P 090 | 75% PET B | PET A | 66% PET B | 0.155 mm ECCS, DR620CA |

The percentage of PET A in the adhesive, intermediate and top layers is 100 minus the PET B percentage indicated. In variants TP628A and TP628B, a single-layer coating was applied.

Variants P076 - P080 and P086 - P090 were used for adhesion tests.

The reference material used in the compound tests was a lacquered can.

Specifications:

- steel base: 0.24 mm T57CA
- tin plating: 2.8/2.8 g/m$^2$
- passivation: 311 (approx. 5 mg/m$^2$ Cr)
- lacquer system (adhesive lacquer: approx. 5 g/m$^2$ and top lacquer: approx. 12 g/m$^2$, as is customarily used for screw caps).

To test the compound adhesion directly after application, a layer of compound is applied to the coating variant to be examined, and this layer is cured in a hot air furnace under suitable conditions. The specimen is cut into narrow strips, after which a blade is used to cut off a small piece of the compound applied. A 180° peel test was then carried out in a tensile strength tester, using the exposed substrate and the cut-out piece of compound as the point of engagement. The adhesion of the compound is excellent if the compound layer breaks during the peel test and sufficient if the peel strength is greater than 1 N/mm.

To establish the compound adhesion after sterilisation, after the compound has been applied and cured the entire specimen is placed in a high-pressure pan containing demineralised water. The pan is heated to a temperature of 121°C, after which the specimen is sterilised for 1 hour at this temperature. After cooling, the specimen is again cut into narrow strips and is kept moist through being immersed in demineralised water until, shortly afterwards, a peel test is carried out following the procedure described above.

In the first instance, it was attempted to carry out this test as an adhesion test for the compound. It was found that the adhesion of the compound to the PET was stronger than the adhesion of PET to ECCS. This method was therefore found to be suitable for determining the adhesion to ECCS.

In order to determine the adhesion after sterilisation, use is made of the (particular) phenomenon that it is possible to obtain excellent adhesion between cured PVC-containing compound and a top layer comprising 100% PET B. The procedure is as follows.

Slightly wider strips of P064 are laid onto the strips of material with cured compound already on them. This *sandwich* is placed between two stainless steel plates which are fixed at the four comers by means of a nut and bolt (manually tightened). This assembly is placed in a high-pressure pan containing demineralised water and is heated. After 121°C (1 bar excess pressure) has been reached, sterilisation is carried out for a further hour. After cooling, the specimens which have been placed on top of one another are removed from the container and placed in a glass beaker containing water, in order to keep the specimens moist (drying generally allows the adhesion to improve). To carry out the peel test, an incision is then again made between the compound and the coated material to be tested. Then, the ends of the specimen plate to be tested and the support plate made of P064 are clamped in the test stand. Then, a 180° peel test is carried out in the same way as that described above.

The adhesion determined using this method represents a measure of adhesion in the wet state and thus provides an indication of the adhesion to, for example, the inside of a sterilised packaging.

There is a considerable difference in adhesion which can be achieved between compound and coating layer amongst the tested mixtures of the PET A and PET B variants, and PET C (copolymer).

PET A (TP628A) and PET C (TP628B) exhibit scarcely any adhesion to a PVC-containing compound. In both cases, the adhesion is very inadequate in the dry state. These variants are not suitable for use as a coating for the inside of screw caps (forces measured from approx. 0.1-0.2 N/mm; the peel strength should be above 1 N/mm).

In principle, very good adhesion can be obtained between PVC-containing compound and a top layer comprising a mixture of PET A and PET B. A number of PVC-containing compounds were tested. Some of the compounds are (according to the supplier) particularly suitable for pasteurisation, other types for sterilisation applications. Compounds from various suppliers were tested. As can be seen from the table containing the test results concerning the compound adhesion directly after application, the percentage of PET B which is required depends on the compound tested.

| *Adhesion of a number of compounds to the tested variants immediately after application* | | | | |
|---|---|---|---|---|
| Variant code | Compound 1 | Compound 2 | Compound 3 | Compound 4 |
| P064 | Breakage | Breakage | Not tested | Not tested |
| P077 | Moderate adhesion | Breakage | Not tested | Not tested |
| P079 | Breakage | Breakage | Not tested | Not tested |
| P086 | Not tested | Not tested | Breakage | Breakage |
| P087 | Breakage | Breakage | No adhesion | No adhesion |
| P088 | Breakage | Breakage | Breakage | Strong adhesion |
| P089 | Breakage | Breakage | Breakage | Breakage |
| Compound 1: Compound from supplier A suitable for pasteurisation (fat-containing foodstuffs) | | | | |

(continued)

| Adhesion of a number of compounds to the tested variants immediately after application | | | | |
|---|---|---|---|---|
| Variant code | Compound 1 | Compound 2 | Compound 3 | Compound 4 |
| P090 | Breakage | Breakage | Breakage | Breakage |
| Compound 2: Compound from supplier A for sterilisation applications (fat-containing foodstuffs) | | | | |
| Compound 3: Compound from supplier B suitable for hot fill and pasteurisation applications | | | | |
| Compound 4: Compound from supplier B suitable for sterilisation applications | | | | |

The compound adhesion is optimum if breakage occurs during the peel test If good adhesion is obtained immediately after application (breakage in the compound during the peel test), in all cases it was found that, after sterilisation or pasteurisation, the adhesion of the compounds to the PET coating layer was greater than that of the coating layer to the ECCS. Good compound adhesion even after pasteurisation or sterilisation is essential for successful use of these materials, since a treatment of this nature is almost always used.

In all cases, it was found that the compounds tested exhibited highly insufficient adhesion to TP628A and TP628B. Of these variants, variant TP628B (PET C) exhibits slightly less poor adhesion, but still adheres insufficiently to PVC-containing compound.

For non-processable/pasteurisation applications, ≥ 50% PET B in the top layer is sufficient to obtain good adhesion to all the compounds tested. For sterilisation applications, a higher percentage is required: ≥ 66% PET B in the top layer. At these concentrations of PET B, all the compounds tested are suitable. However, for both cases it is possible that lower percentages may also give good results, depending on the compound used. Therefore, by making use of specific compounds for specific applications, it is possible to use lower percentages of PET B in the top layer.

By sealing the specimen to a reference specimen with a compound applied thereon, it is possible to determine the force which is required to pull the compound off. If the adhesion of the compound to the PET is sufficiently great, it is not the adhesion of the compound to the plastic, but rather the adhesion of the plastic layer to the steel which is measured. This is lower under wet conditions than the adhesion under dry conditions. A number of results are given in the table.

| Variant code | $F_{mean}$ Compound 1 N/mm | $F_{mean}$ Compound 2 N/mm | Adhesive layer |
|---|---|---|---|
| P064 | 2.5; 2.6 | 1.7; 1.7 | PET B |
| P076 | 1.2; 3.0 | 0.1*; 0.3* | 33% PET B |
| P077 | 2.4; 2.4 | 1.6; 1.6 | PET B |
| P078 | 2.8; 3.1 | 0.4*; 2.1, 0.6; 0.7* | 66% PET B |
| P079 | 2.6; 2.8 | 1.7; 1.7 | PET B |
| P080 | 2.3; 2.5 | 0.9; 1.2 | PET B |
| P088 | n.d. | 0.5*, 0.3* | 50% PET B |
| P089 | n.d. | 0.3*, 0.2* | 50% PET B |
| P090 | n.d. | 0.6, 1.0 | 75% PET B |
| Lac. Ref | 2.2; 2.3 | 2.6; 1.4, 1.8, 1.3 | |

\* : no adhesion or scarcely any adhesion,
n.d.: not determined

The impression of the coating with a 100% PET B adhesive layer is relatively consistent, although the two types of compound give a different effect to the adhesion. In the variants with an adhesive layer containing 33% PET B, there is a somewhat greater spread. It is clear that the adhesion to steel when using compound 2 is considerably lower (insufficient). This effect is also found when using compound 1, although in this case the effect is less intensive. With compound 1, the adhesion appears to remain sufficient in all cases.

The relationship between the quantity of PET B in the adhesive layer and the adhesion to the ECCS (under wet conditions) measured with compound 2 can be described according to the following formula:

$$Peel\ strength = 1.4 \cdot 10^{-4} * P^2$$

where P is the percentage of PET B in the adhesive layer and the peel strength is expressed in N/mm.

In the case of compound 1, the measured values are much higher. The difference between the two types is that compound 2 is a sterilisation compound, while compound 1 is more suitable for hot fill and pasteurisation. In this case, the relationship can be described by the following equation

$$Peel\ strength = \ln P - 1.96$$

A clear conclusion which can be drawn from these measurements is that different compounds lead to different adhesion. For certain applications, low PET B contents are possible.

The top layer of a PET coating (intended in particular for screw caps) must exhibit good adhesion to a PVC-containing compound. Adhesion of PET to a PVC is difficult *to* achieve. It is generally accepted that PET does not adhere to PVC. Known solutions for improving the adhesion to compound are relatively complex and, in some cases, use PVC-containing layers. With the above-described method of mixing a crystallisable PET and a non-crystallisable PET provides very good adhesion in a simple manner.

For the intermediate layer, it is important, in the case of transparent coating layers, that the appearance of the layer should not change visibly as a result of (dry) heat treatments. It has been found that with the crystallisable polyesters normally used, such as PET A, undesirable discoloration takes place as a result of a heat treatment. It has been found that if a polyester layer comprising a mixture of mainly crystallisable polyester (PET A) and some non-crystallisable polyester (PET B) is used, it is not possible to detect any change in appearance when used as transparent coating layer for metals which still have to undergo a heat treatment (for example for curing a compound or printing).

It has been found that in the case of sterilisation and pasteurisation, the adhesion of a PET A or PET C is insufficient to obtain a suitable material for use as base material for metal packaging.

The adhesion of PET to steel is considerably improved by using a mixture of PET B and PET A. An excessively high percentage of PET B leads to undesirable deformation of the coating (wrinkling), with the result that the laminate cannot be used as a material for, in particular, screw caps printed with heat-curing ink.

A comparison between PET C and a mixture of PET B and PET A indicates the importance of choosing a mixture. For example, compound adhesion to PET C is absolutely insufficient.

This means that other polyesters which have a non-crystallisable character will also give a similar effect, for example copolymerised PET in which approx. 15% of the terephthalic acid weight fraction is replaced by naphthalenedicarboxylic acid, preferably naphthalene-2,6-dicarboxylic acid. The pure polyester of naphthalenedicarboxylic acid and ethylene glycol (PEN) has the additional advantage of very good barrier properties.

It will be understood that the above mentioned examples do not limit the invention in any way. The scope of protection is defined by the claims which follow.

**Claims**

1. Process for producing a *plastic* web for coating a metal substrate, in which the plastic used is polyester, **characterised in that** the plastic web is produced by extruding a mixture of crystallisable polyester and non-crystallisable polyester.

2. Process according to Claim 1, **characterised in that** the polyesters used are copolyesters.

3. Process according to Claim 2, **characterised in that** copolyesters based on terephthalic acid are used.

4. Process according to Claim 3, **characterised in that** polyesters, which are formed on the basis of PET, are used.

5. Process according to one of Claims 1-4, **characterised in that** the non-crystallisable polyester used is a copolyester containing CHDM (1,4-cyclohexanedimethanol).

6. Process according to Claim 5, **characterised in that** the CHDM-modified copolyester is obtained by reacting a mixture of terephthalic acid, ethylene glycol (ethanediol) and CHDM.

7. Process according to one of Claims 1-4, **characterised in that** the non-crystallisable polyester used is a PET/PEN copolymer, which is obtained by reacting a mixture of terephthalic acid, naphthalenedicarboxylic acid and ethylene glycol (ethanediol).

8. Process according to one of Claims 1-7, **characterised in that** the mixture used has a non-crystallisable weight fraction, which is greater than 6%.

9.  Process according to Claim 8, **characterised in that** the mixture used has a non-crystallisable weight fraction, which is less than 90%.

10. Process according to Claim 8 or 9, **characterised in that** the mixture used has a non-crystallisable weight fraction which is 25% or greater.

11. Process according to one of Claims 8-10, **characterised in that** the mixture used has a non-crystallisable weight fraction which is 33% or greater.

12. Process according to one of Claims 8-11, **characterised in that** the mixture used has a non-crystallisable weight fraction which is 50% or greater.

13. Process according to one of Claims 8-12, **characterised in that** the mixture used has a non-crystallisable weight fraction which is 66% or greater.

14. Process according to one of Claims 8-13, **characterised in that** the mixture used has a non-crystallisable weight fraction which is 75% or greater.

15. Laminate comprising a metal substrate and a plastic layer, **characterised in that** the plastic layer comprises an adhesive layer, the adhesive layer substantially comprising a plastic web produced according to the process described in one of Claims 1-14.

16. Laminate comprising a metal substrate and a plastic layer, **characterised in that** the plastic layer comprises a top layer, the top layer substantially comprising a plastic web produced according to the process described in one of Claims 1-14.

17. Laminate according to Claims 15 and 16, **characterised in that** there is an intermediate layer between the adhesive layer and the top layer, the intermediate layer substantially comprising a plastic web, which is produced by extruding a polyester.

18. Laminate according to Claim 17, **characterised in that** the intermediate layer is produced according to the process described in one of Claims 1-7.

19. Laminate according to Claim 18, **characterised in that** the intermediate layer is produced from a mixture with a non-crystallisable weight fraction which is 10% or greater.

20. Laminate according to Claim 19, **characterised in that** the intermediate layer is produced from a mixture with a non-crystallisable fraction which is 33% or greater.

21. Screw cap produced from a laminate according to one of Claims 15-20.

22. Crown cork produced from a laminate according to one of Claims 15-20.

23. Easy open end produced from a laminate according to one of Claims 15-20.

24. Component produced from a laminate according to one of Claims 16-20, in which a PVC-containing compound is applied to the top layer of the plastic layer of the laminate.

25. Component according to Claim 24, in which the non-crystallisable weight fraction in the top layer is 25% or greater.

26. Component according to Claim 24, in which the weight fraction is 35% or greater.

27. Component according to Claim 26, in which the said weight fractionis 50% or greater.

28. Component according to Claim 27, in which the said weight fraction is 66% or greater.

**Patentansprüche**

1. Verfahren zum Herstellen einer Kunststoffbahn zum Beschichten eines Metallsubstrats, bei welchem der verwendete Kunststoff Polyester ist, **dadurch gekennzeichnet, daß** die Kunststoffbahn durch Extrudieren einer Mischung aus kristallisierbarem Polyester und nichtkristallisierbarem Polyester hergestellt wird.

2. Verfahren nach Anspruch 1, **dadurch gekennzeichnet, daß** die verwendeten Polyester Copolyester sind.

3. Verfahren nach Anspruch 2, **dadurch gekennzeichnet, daß** Copolyester auf der Basis von Terephthalsäure verwendet werden.

4. Verfahren nach Anspruch 3, **dadurch gekennzeichnet, daß** Polyester verwendet werden, die auf der Basis von PET gebildet sind.

5. Verfahren nach einem der Ansprüche 1 - 4, **dadurch gekennzeichnet, daß** das verwendete nichtkristallisierbare Polyester ein Copolyester ist, das CHDM (1,4-Cyclohexandimethanol) enthält.

6. Verfahren nach Anspruch 5, **dadurch gekennzeichnet, daß** das CHDM-modifizierte Copolyester durch Reaktion einer Mischung aus Terephthalsäure, Ethylenglykol (Ethandiol) und CHDM erhalten ist.

7. Verfahren nach einem der Ansprüche 1 - 4, **dadurch gekennzeichnet, daß** das verwendete nichtkristallisierbare Polyester ein PET-/PEN-Copolymer ist, das durch Reaktion einer Mischung aus Terephthalsäure, Naphthalendicarbonsäure und Ethylenglykol (Ethandiol) erhalten ist.

8. Verfahren nach einem der Ansprüche 1 - 7, **dadurch gekennzeichnet, daß** die verwendete Mischung einen nichtkristallisierbaren Gewichtsanteil hat, der größer als 6 % ist.

9. Verfahren nach Anspruch 8, **dadurch gekennzeichnet, daß** die verwendete Mischung einen nichtkristallisierbaren Gewichtsanteil hat, der kleiner als 90 % ist.

10. Verfahren nach Anspruch 8 oder 9, **dadurch gekennzeichnet, daß** die verwendete Mischung einen nichtkristalliserbaren Gewichtsanteil hat, der 25 % oder größer ist.

11. Verfahren nach einem der Ansprüche 8 - 10, **dadurch gekennzeichnet, daß** die verwendete Mischung einen nichtkristalliserbaren Gewichtsanteil hat, der 33 % oder größer ist.

12. Verfahren nach einem der Ansprüche 8 - 11, **dadurch gekennzeichnet, daß** die verwendete Mischung einen nichtkristalliserbaren Gewichtsanteil hat, der 50 % oder größer ist.

13. Verfahren nach einem der Ansprüche 8 - 12, **dadurch gekennzeichnet, daß** die verwendete Mischung einen nichtkristalliserbaren Gewichtsanteil hat. der 66 % oder größer ist.

14. Verfahren nach einem der Ansprüche 8 - 13, **dadurch gekennzeichnet, daß** die verwendete Mischung einen nichtkristalliserbaren Gewichtsanteil hat, der 75 % oder größer ist.

15. Laminat mit einem Metallsubstrat und einer Kunststoffschicht, **dadurch gekennzeichnet, daß** die Kunststoffschicht eine Haftschicht aufweist, wobei die Haftschicht im wesentlichen eine Kunststoffbahn aufweist, die nach dem in einem der Ansprüche 1 - 14 beschriebenen Verfahren hergestellt ist.

16. Laminat mit einem Metallsubstrat und einer Kunststoffschicht, **dadurch gekennzeichnet, daß** die Kunststoffschicht eine obere Schicht aufweist, wobei die obere Schicht im wesentlichen eine Kunststoffbahn aufweist, die nach dem in einem der Ansprüche 1 - 14 beschriebenen Verfahren hergestellt ist.

17. Laminat nach Anspruch 15 und 16, **dadurch gekennzeichnet, daß** eine Zwischenschicht zwischen der Haftschicht und der oberen Schicht vorliegt, wobei die Zwischenschicht im wesentlichen eine Kunststoffbahn aufweist, die durch Extrudieren eines Polyesters hergestellt ist.

18. Laminat nach Anspruch 17, **dadurch gekennzeichnet, daß** die Zwischenschicht nach dem in einem der Ansprüche 1 - 7 beschriebenen Verfahren hergestellt ist.

19. Laminat nach Anspruch 18, **dadurch gekennzeichnet, daß** die Zwischenschicht aus einer Mischung mit einem nichtkristallisierbaren Gewichtsanteil hergestellt ist, der 10 % oder größer ist.

20. Laminat nach Anspruch 19, **dadurch gekennzeichnet, daß** die Zwischenschicht aus einer Mischung mit einem nichtkristallisierbaren Anteil hergestellt ist, der 33 % oder größer ist.

21. Schraubverschluß, der aus einem Laminat nach einem der Ansprüche 15 - 20 hergestellt ist.

22. Kronenkapsel, die aus einem Laminat nach einem der Ansprüche 15 - 20 hergestellt ist.

23. Aufreißdeckel, der aus einem Laminat nach einem der Ansprüche 15 - 20 hergestellt ist.

24. Bauteil, das aus einem Laminat nach einem der Ansprüche 16 - 20 hergestellt ist, bei welchem eine PVC enthaltende Verbindung auf die obere Schicht der Kunststoffschicht des Laminats aufgebracht ist.

25. Bauteil nach Anspruch 24, bei welchem der nichtkristallisierbare Gewichtsanteil in der oberen Schicht 25 % oder größer ist.

26. Bauteil nach Anspruch 24, bei welchem der Gewichtsanteil 35 % oder größer ist.

27. Bauteil nach Anspruch 26, bei welchem der Gewichtsanteil 50 % oder größer ist.

28. Bauteil nach Anspruch 27, bei welchem der Gewichtsanteil 66 % oder größer ist.

**Revendications**

1. Procédé de production d'une bande de matière plastique destinée à revêtir un substrat métallique, dans lequel la matière plastique employée est un polyester, **caractérisé en ce que** l'on produit la bande de matière plastique par extrusion d'un mélange d'un polyester cristallisable et d'un polyester non-cristallisable.

2. Procédé conforme à la revendication 1, **caractérisé en ce que** les polyesters employés sont des copolyesters.

3. Procédé conforme à la revendication 2, **caractérisé en ce que** l'on emploie des copolyesters à base d'acide téréphtalique.

4. Procédé conforme à la revendication 3, **caractérisé en ce que** l'on emploie des polyesters formés à base de PET.

5. Procédé conforme à l'une des revendications 1 à 4, **caractérisé en ce que** le polyester non-cristallisable employé est un copolyester comportant du CHDM (1,4-cyclohexane-diméthanol).

6. Procédé conforme à la revendication 5, **caractérisé en ce que** l'on obtient le copolyester modifié par CHDM en faisant réagir un mélange d'acide téréphtalique, d'éthylèneglycol (éthanediol) et de CHDM.

7. Procédé conforme à l'une des revendications 1 à 4, **caractérisé en ce que** le polyester non-cristallisable employé est un copolymère PET/PEN, que l'on obtient en faisant réagir un mélange d'acide téréphtalique, d'acide naphtalène-dicarboxylique et d'éthylèneglycol (éthanediol).

8. Procédé conforme à l'une des revendications 1 à 7, **caractérisé en ce que**, dans le mélange employé, la fraction pondérale de composant non-cristallisable est supérieure à 6 %.

9. Procédé conforme à la revendication 8, **caractérisé en ce que**, dans le mélange employé, la fraction pondérale de composant non-cristallisable est inférieure à 90 %.

10. Procédé conforme à la revendication 8 ou 9, **caractérisé en ce que**, dans le mélange employé, la fraction pondérale de composant non-cristallisable est supérieure ou égale à 25 %.

**11.** Procédé conforme à l'une des revendications 8 à 10, **caractérisé en ce que**, dans le mélange employé, la fraction pondérale de composant non-cristallisable est supérieure ou égale à 33 %.

**12.** Procédé conforme à l'une des revendications 8 à 11, **caractérisé en ce que**, dans le mélange employé, la fraction pondérale de composant non-cristallisable est supérieure ou égale à 50 %.

**13.** Procédé conforme à l'une des revendications 8 à 12, **caractérisé en ce que**, dans le mélange employé, la fraction pondérale de composant non-cristallisable est supérieure ou égale à 66 %.

**14.** Procédé conforme à l'une des revendications 8 à 13, **caractérisé en ce que**, dans le mélange employé, la fraction pondérale de composant non-cristallisable est supérieure ou égale à 75 %.

**15.** Stratifié comprenant un substrat métallique et une couche de matière plastique, **caractérisé en ce que** la couche de matière plastique comporte une couche adhésive, laquelle couche adhésive comporte essentiellement une bande de matière plastique produite selon un procédé décrit dans l'une des revendications 1 à 14.

**16.** Stratifié comprenant un substrat métallique et une couche de matière plastique, **caractérisé en ce que** la couche de matière plastique comporte une couche de dessus, laquelle couche de dessus comporte essentiellement une bande de matière plastique produite selon un procédé décrit dans l'une des revendications 1 à 14.

**17.** Stratifié conforme aux revendications 15 et 16, **caractérisé en ce qu'**il comporte une couche intermédiaire placée entre la couche adhésive et la couche de dessus, laquelle couche intermédiaire est essentiellement constituée d'une bande de matière plastique produite par extrusion d'un polyester.

**18.** Stratifié conforme à la revendication 17, **caractérisé en ce que** la couche intermédiaire est produite selon un procédé décrit dans l'une des revendications 1 à 7.

**19.** Stratifié conforme à la revendication 18, **caractérisé en ce que** la couche intermédiaire est produite à partir d'un mélange dans lequel la fraction pondérale de composant non-cristallisable est supérieure ou égale à 10 %.

**20.** Stratifié conforme à la revendication 19, **caractérisé en ce que** la couche intermédiaire est produite à partir d'un mélange dans lequel la fraction de composant non-cristallisable est supérieure ou égale à 33 %.

**21.** Bouchon à vis fabriqué à partir d'un stratifié conforme à l'une des revendications 15 à 20.

**22.** Bouchon-couronne fabriqué à partir d'un stratifié conforme à l'une des revendications 15 à 20.

**23.** Extrémité à ouverture facile, fabriquée à partir d'un stratifié conforme à l'une des revendications 15 à 20.

**24.** Pièce fabriquée à partir d'un stratifié conforme à l'une des revendications 16 à 20, dans laquelle un composite contenant du PVC est appliqué sur la couche de dessus de la couche de matière plastique du stratifié.

**25.** Pièce conforme à la revendication 24, dans laquelle la fraction pondérale de composant non-cristallisable dans la couche de dessus est supérieure ou égale à 25 %.

**26.** Pièce conforme à la revendication 24, dans laquelle ladite fraction pondérale est supérieure ou égale à 35 %.

**27.** Pièce conforme à la revendication 26, dans laquelle ladite fraction pondérale est supérieure ou égale à 50 %.

**28.** Pièce conforme à la revendication 27, dans laquelle ladite fraction pondérale est supérieure ou égale à 66 %.